# EUROPÄISCHE PATENTSCHRIFT

(11) **EP 3 351 432 B1**
(45) Veröffentlichungstag und Bekanntmachung des Hinweises auf die Patenterteilung: **17.07.2019**
(21) Anmeldenummer: 18152995.9
(22) Anmeldetag: 23.01.2018
(51) Int. Cl.: B60R 9/10, B60R 9/048, B60R 9/06

(54) **FAHRRADTRÄGER FÜR EIN FAHRZEUG**
BICYCLE HOLDER FOR A VEHICLE
PORTE-BICYCLETTE POUR UN VÉHICULE

(30) Priorität: 24.01.2017 DE 102017101323
(43) Veröffentlichungstag der Anmeldung: 25.07.2018
(73) Patentinhaber: Geronimo GmbH, 82327 Tutzing (DE)
(72) Erfinder: Stuhr, Marco, 84432 Hohenpolding (DE)
(74) Vertreter: Maiwald Patent- und Rechtsanwaltsgesellschaft mbH

(56) Entgegenhaltungen:
- DE-T5-112010 002 231
- US-A1- 2007 164 065

## Beschreibung

### Technisches Gebiet

Die Erfindung betrifft ein Radhaltesystem für ein Laufrad eines Fahrrades, sowie ein Fahrradträgersystem für ein Fahrrad bzw. ein E-Bike zur Montage an einem Fahrzeug zur einfachen und schnellen Montage der Fahrräder.

### Technischer Hintergrund

Seit der Erfindung des Automobils steigt der Mobilitätsbedarf der Menschen. Durch Autos können größere Distanzen in einer angemessenen Zeit bewältigt werden. Zunehmend besteht der Bedarf Freizeitgeräte im Auto zu transportieren. Hiervon ist auch das Fahrrad betroffen. Das Fahrrad passt durch seine Größe nur bedingt in ein Auto. Aus diesem Grund wurden in der Vergangenheit mehrere verschiedene Systeme entwickelt, um Fahrräder an Autos zu befestigen und zu transportieren. Die gängigen Transportsysteme werden auf dem Dach des Fahrzeugs, auf der Anhängerkupplung oder am Kofferraumdeckel befestigt. Die Transportsysteme sind je nach Hersteller unterschiedlich gestaltet und weisen unterschiedliche Merkmale auf. Alle Transportsysteme eint, dass sie die Fahrräder sicher an dem Fahrzeug anbringen möchten. Jedoch ist der Transport von Fahrrädern meist mit Aufwand verbunden, da die Fahrräder hochgehoben, häufig die Sättel demontiert oder Halterungen per Hand angebracht werden müssen.

Die DE 11 2010 002231 offenbart beispielsweise ein Haltesystem für ein Fahrrad mit einer Aufnahme für ein Laufrad eines Fahrrades und einen bewegbaren Haltebügel zur Fixierung eines Laufrades eines Fahrrades, wobei der bewegbare Haltebügel von einer ersten Position in eine zweite Position bewegbar ist, wobei der Haltebügel in der ersten Position von einem einzusetzenden Laufradrad beabstandet ist und in der zweiten Position des Haltebügels an einem einzusetzenden Laufrad anliegt.

### Zusammenfassung der Erfindung

Es ist die Aufgabe der Erfindung eine Radhalterung bereitzustellen, bei denen ein Fahrrad einfach fixiert werden kann.

Diese Aufgabe wird durch den Gegenstand der unabhängigen Ansprüche gelöst. Ausführungsformen und Weiterbildungen sind den abhängigen Ansprüchen, der Beschreibung und den Figuren zu entnehmen.

Gemäß einer Ausführungsform der Erfindung wird ein Radhaltesystem für ein Laufrad bereitgestellt. Das Radhaltesystem weist eine Aufnahme für ein Laufrad eines Fahrrades und wenigstens einen bewegbaren Haltebügel, zur Fixierung eines Laufrades eines Fahrrades auf, wobei der bewegbare Haltebügel eine erste Position und eine zweite Position aufweist. In der ersten Position ist der Haltebügel beabstandet zum einzusetzenden Laufrad. In der zweiten Position liegt der Haltebügel am Laufrad an. Weiter weist das Radhaltesystem eine Verriegelungsvorrichtung zur Verriegelung des Laufrades in der Aufnahme, sowie eine Auslösevorrichtung auf. Die Verriegelungsvorrichtung ist zusätzlich zu dem Haltebügel und getrennt von diesem vorhanden. Die Auslösevorrichtung ist ausgeführt zum automatischen Betätigen der Verriegelungsvorrichtung, sobald ein Laufrad in der Aufnahme platziert wird. Durch das Auslösen der Auslösevorrichtung wird der in der ersten Position befindliche Haltebügel entriegelt und an das platzierte Laufrad gedrückt, sodass das Laufrad fixiert ist. Weiter ist die Auslösevorrichtung ausgeführt, nach Fixierung des Laufrades durch die Haltebügel, die Verriegelungsvorrichtung zu betätigen und das Laufrad in der fixierten Position zu verriegeln, sodass das Laufrad in der Aufnahme arretiert ist.

Der Haltebügel kann vorne und/oder hinten an der Aufnahme montiert sein. Im Wesentlichen kann der Haltebügel zwei Positionen einnehmen, die erste Position (offen) und die zweite Position (geschlossen), wobei der Haltebügel in der ersten Position einen Abstand zum Laufrad aufweist und in der zweiten Position an dem Laufrad anliegt. In die Aufnahme der vorliegenden Erfindung kann ein Laufrad, insbesondere ein Laufrad eines Fahrrades, platziert werden. Ist das Laufrad in der Aufnahme platziert und wird ausreichend Druck auf die in der Aufnahme befindliche Auslösevorrichtung aufgebracht, kann die Auslösevorrichtung den wenigstens einen Haltebügel in die zweite Position bewegen. In der zweiten Position liegt der Haltebügel an dem in der Aufnahme platzierte Laufrad an. Ferner löst die Auslösevorrichtung die Verriegelungsvorrichtung aus, welche das Laufrad in der Aufnahme, zusätzlich zu dem Haltebügel, fixiert und gegen Herausspringen nach oben sichert. In der ersten Position des Haltebügels kann das Laufrad des Fahrrades einfach, schnell und komfortabel entnommen werden. In der ersten Position (geöffnet) ergibt sich z.B. ein Winkel zwischen Aufnahme und Haltebügel von um die 180° und der Haltebügel kann in der ersten Position fixiert werden, sodass der Haltebügel gegen ungewolltes Bewegen gesichert ist. Insbesondere können in den/die Haltebügel ungewollte Bewegungen durch Wind oder Erschütterungen induziert werden. Das vorhergehend und nachfolgend beschriebene Radhaltesystem kann auch mit zwei Haltebügeln ausgeführt sein. In diesem Fall können z.B. beide Haltebügel durch die Auslösevorrichtung an das Laufrad gedrückt werden. Die Verriegelungsvorrichtung, beispielsweise einen Haken kann hierbei seitlich, zwischen die Speichen des Laufrades schwenken um dort einzugreifen. Jedoch kann auch ein Bügel oder ein Haken von oben auf die Felge des Laufrades, d.h. in radialer Richtung in Bezug auf die Nabe nach außen, drücken.

Das Radhaltesystem kann durch das Laufrad automatisch ausgelöst werden, sodass der/die Haltebügel an das Laufrad schwenken und die Verriegelungsvorrichtung, z.B. angetrieben durch einen Energiespeicher bzw. eine Feder, das Laufrad sichert. Des Weiteren kann durch Betätigen der Auslösevorrichtung die Verriegelungsvorrichtung freigegeben werden, und gleichzeitig bewegen sich die Haltebügel weg von dem eingespannten Laufrad, sodass das Laufrad einfach entnommen werden kann. Durch den hohen Grad an Automatisierung wird es dem Nutzer ermöglicht möglichst einfach ein Laufrad einzuspannen und wieder aus dem Radhaltesystem zu entfernen, insbesondere wenn er die Hände durch das Heben des Rades nicht fei hat.

Die Bezeichnung Fahrrad bezieht sich auf Zweiräder welche überwiegend durch den Nutzer betrieben werden und auf E-Bikes, welche einen elektrischen Motor für den Vortrieb nutzen können. Eingeschlossen sind insbesondere Rennräder, Cityräder, Fixis, Damenräder, BMX, Hollandräder, Liegeräder, Falt- oder Klappräder, Trekkingräder und Mountainbikes.

Ein System im Rahmen dieser Anmeldung ist eine übergeordnete Einheit mit einer Mehrzahl an einzelnen Vorrichtungen, wie beispielsweise der Verriegelungsvorrichtung, der Auslösevorrichtung, der Aufnahme und dem Haltebügel.

Gemäß einer Ausführungsform weist das Radhaltesystem eine Entriegelungsvorrichtung zur Freigabe des Laufrades durch das Radhaltesystem auf. Die Entriegelungsvorrichtung ist ausgeführt, bei Betätigung der Entriegelungsvorrichtung das arretierte Laufrad aus dem Radhaltesystem freizugeben.

Das durch die Verriegelungsvorrichtung in dem Radhaltesystem fixierte Laufrad kann durch die Betätigung der Entriegelungsvorrichtung freigegeben werden. Hierzu kann die Verriegelungsvorrichtung entsperrt und den/die Haltebügel in die erste Position gebracht werden. Somit kann das Laufrad einfach, schnell und komfortabel aus der Radhaltevorrichtung entnommen werden.

Gemäß einer Ausführungsform der vorliegenden Erfindung weist das Radhaltesystem wenigstens einen Haltebügel auf, wobei ein Haltebügel wenigstens einen Arm aufweist, welcher einen Haltesteg aufweist und wobei der Haltesteg das Laufrad quer zur Laufrichtung umgibt.

Mit anderen Worten, sind der bzw. die Haltebügel aus wenigstens zwei Teilstücken ausgeführt, wobei diese auch aus einem durchgehenden Teil gefertigt werden können. Die Haltebügel können einen Arm und einen Halte- bzw. Verbindungsteg aufweisen. Eine Konstruktion des Haltebügels mit einem Arm kann zu einer einfacheren Entnahme des Laufrades aus des Aufnahme führen, da der Haltebügel nur so weit geöffnet werden muss, dass das Laufrad an dem Halte- bzw. Verbindungssteg vorbeikommt. Der Haltebügel kann auch mit zwei Armen vorgesehen sein. In diesem Fall weist der Haltebügel drei Teilstücke auf. Der Halte- bzw. Verbindungssteg, der unter anderem die zwei Arme verbinden kann, kann so gestaltet sein, dass der Halte- bzw. Verbindungssteg eine Form aufweist, welche die Aufnahme eines Laufrades ermöglicht. Idealerweise umgibt der Halte- bzw. Verbindungssteg das eingespannte Laufrad quer zu dessen Laufrichtung. Somit wird, wenn die Haltebügel sich in geschlossener Position befinden, das Laufrad am seitlichen Herauskippen aus dem Radhaltesystem gehindert. Die beiden Arme des Haltebügels können symmetrisch, aber auch asymmetrisch ausgeführt sein. Auch für die Form der Arme der Haltebügel ergeben sich zahlrieche gestalterische Möglichkeiten, z.B. gerade, gekrümmt oder gestuft.

Gemäß einer Ausführungsform der vorliegenden Erfindung ist wenigstens ein Arm des Haltebügels gerade ausgeführt.

Ein Arm des Haltebügels bzw. die Arme des Haltebügels können gerade ausgeführt sein und parallel zueinander angeordnet sein. Hierdurch wird möglichst wenig Material verbraucht und die Form ist einfach herzustellen.

Gemäß einer Ausführungsform der vorliegenden Erfindung ist wenigstens ein Arm des Haltebügels gekrümmt ausgeführt.

Ein Arm des Haltbügels bzw. die Arme des Haltebügels können gekrümmt ausgeführt sein, dieses kann unter anderem ein einfacheres Be- und Entladen gewährleisten. Das System kann auch einen geringeren Öffnungswinkel zwischen der ersten und der zweiten Position aufweisen. Die Krümmung des Armes bzw. der Arme kann sowohl konvex also auch konkav sein.

Gemäß einer Ausführungsform der vorliegenden Erfindung ist der Haltebügel aus Metall ausgeführt.

Zum Einsatz im Außenbereich und aus Stabilitätsgründen kann vorgesehen sein, den/die Haltebügel aus Metall zu fertigen. Die Metalle können Eisen, Edelstahl, Aluminium, Magnesium, diverse Stähle, Messing, Kupfer oder Legierungen aus den genannten Metallen sein. Es sei angemerkt, dass der Haltbügel aus Draht bzw. einer Drahtkonstruktion oder einer Blechkonstruktion ausgeführt sein kann. Eine Blechkonstruktion kann durch Falze sehr formstabil gemacht werden. Ist eine Federkraft auf das Laufrad gewünscht, so kann die Ausfertigung mit einem federnden Ansatz ausgeführt werden

Gemäß einer Ausführungsform der vorliegenden Erfindung ist der Haltebügel aus Kunststoff ausgeführt.

Kunststoffe sind korrosionsbeständig und können kostengünstig gefertigt werden. Auch weisen moderne Kunststoffe die erforderliche Festigkeit auf. Hierbei kann eine Vielzahl an möglichen Kunststoffe vorgesehen sein. Insbesondere sind Thermoplaste, Duroplaste und Elastomere zu nennen, jedoch kann auch eine Kombination verschiedener Kunststoffe eingesetzt werden.

Gemäß einer Ausführungsform ist eine Kombination aus Kunststoff und Metall zur Herstellung der Haltebügel vorgesehen. Auch können die Haltebügel bzw. Teile der Haltebügel aus einem Komposite-Werkstoff wie Karbon- oder Glasfasern bestehen.

Gemäß einer Ausführungsform der vorliegenden Erfindung ist der Halte- bzw. Verbindungssteg stufenförmig ausgeführt, um verschiedene Laufrad breiten aufzunehmen. Der Abstand sich zwei gegenüberliegenden Stufen kann mit jeder Stufe abnehmen.

Zur Aufnahme von verschiedenen Reifenbreiten von verschiedenen Fahrradtypen kann der Halte- bzw. Verbindungssteg ein stufenförmiges Profil aufweisen. Hierbei kann eine verschiedene Anzahl an Stufen vorgesehen sein. Somit können verschiedene Reifenbreiten von verschiedenen Fahrradtypen in die Haltebügel aufgenommen und sicher fixiert werden. Vor allem mit Blick auf die unterschiedlichen Reifenbreiten von Rennrädern, Cityrädern und Mountainbikes etc. wird der Vorteil einer solchen Gestaltung des Halte- bzw. Verbindungsstegs ersichtlich. In der zweiten Position der Haltebügel kann es somit vorkommen, dass bei Laufrädern von Mountainbikes der Halte- bzw. Verbindungssteg an den jeweiligen Seiten des Mountainbikereifens anliegt, da der Reifen für die restlichen Stufen zu breit ist. Der Abstand zwischen den gegenüberliegenden Stufen kann so gewählt werden, dass die typisch auftretenden Reifenbreiten der verschiedenen Fahrradtypen abgedeckt werden. Die einzelnen Stufen können einen rechten Winkel aufweisen, aber auch einen Winkel größer 90°. Somit verjüngt sich der Abstand zwei gegenüberliegender Stufen kontinuierlich von oben nach unten. Durch diese Gestaltung kann erreicht werden, dass der Reifen besser in die jeweilige Stufe eingebracht werden kann.

Gemäß einer weiteren Ausführungsform ist der Halte- bzw. Verbindungssteg des Haltebügels parabelförmig ausgeführt, um verschiedene Laufradbreiten aufzunehmen.

Ein parabelförmiges Profil des Halte- bzw. Verbindungsstegs der Haltebügel wirkt selbstzentrierend, sodass das Laufrad mittig in Bezug auf den seitlichen Abstand des Laufrades zu dem Arm des Haltebügels in der Aufnahme des Radhaltesystems fixiert wird. Zudem liegt der Halte- bzw. Verbindungssteg über eine größere Fläche an dem Reifen an, da normalerweise die Reifen eines Fahrrades eine konvexe Form aufweisen, welche mit dem parabelförmigen Profil des Halte- bzw. Verbindungsstegs korrespondiert. Auch in dieser Gestaltung kann der Haltebügel die verschiedenen Reifenbreiten der verschiedenen Fahrradtypen aufnehmen.

Das Radhaltesystem kann auch zwei Haltebügel mit verschiedenen Profilen aufweisen. Z.B. kann der vordere Haltebügel ein stufenförmiges Profil aufweisen und der hintere Haltebügel weist ein parabelförmiges Profil auf oder umgekehrt. Des Weiteren kann der Haltebügel aus mehreren Teilelementen mit Gelenken ausgeführt sein, sodass der Haltebügel mit mehreren Teilelementen und mit mehreren Halte- bzw. Verbindungsstegen das Laufrad in mehreren Punkten berührt und das Laufrad soweit wie möglich umschließt.

Gemäß einer weiteren Ausführungsform dieser Erfindung wird ein Fahrradträgersystem für ein Fahrzeug bereitgestellt. Das Fahrradträgersystem weist ein erstes und ein zweites Radhaltesystem auf, eine Verbindungsstange zum Verbinden des ersten und des zweiten Radhaltesystems und eine Kopplungsvorrichtung zum Koppeln des Fahrradträgersystems mit einem Fahrzeug auf, wobei der Haltebügel des ersten Radhaltesystems auf der vom zweiten Radhaltesystem abgewandten Seite und der Haltebügel des zweiten Radhaltesystems auf der vom ersten Radhaltesystem abgewandten Seite angebracht ist.

Das vorhergehend und im Nachfolgenden beschriebene Radhaltesystem für ein Laufrad eines Fahrrades kann auch in Verbindung mit weiteren Radhaltesystemen, einem Verbindungselement zwischen den wenigstens zwei Radhaltesystemen und einer Kopplungsvorrichtung kombiniert werden. Hierdurch kann sich ein Fahrradträgersystem zum Transport von Fahrrädern ergeben. Hierzu können die beiden Radhaltesysteme auf einer gemeinsamen Verbindungsstange montiert werden. Der Abstand der beiden Radhaltesysteme voneinander entlang der Verbindungsstange entspricht z.B. dem Radstand des zu transportierenden Fahrrades. Durch die Kopplungsvorrichtung kann das Fahrradträgersystem an einem Fahrzeug angebracht werden. Das Fahrradträgersystem kann auf einer Anhängerkupplung eines Fahrzeuges, am Kofferraumdeckel eines Fahrzeuges oder auf dem Dach eines Fahrzeuges angebracht werden. Für jede Montageart kann ein anderes Kopplungselement verwendet bzw. angepasst werden. Des Weiteren kann ein modularer Aufbau des Fahrradträgersystems vorgesehen sein, d.h. das Kopplungselement kann im Nachhinein ausgetauscht werden, um sich den Gegebenheiten anzupassen, ohne dass das komplette Fahrradträgersystem neu erworben werden muss. In der ersten Position der Halterbügel des Radhaltesystems sind die Haltebügel arretiert, sodass die Haltebügel während der Fahrt des Fahrzeuges nicht unkontrolliert bewegt werden können. Zur Montage eines Fahrrades in dem Fahrradträgersystem kann ein Fahrrad auf die Aufnahmen der beiden Radhaltesysteme gestellt werden. Durch Ausübung von leichten Druck bzw. durch das Eigengewicht des Fahrrades kann die Auslösevorrichtung des Radhaltesystems ausgelöst werden. Die Auslösevorrichtung kann die Haltebügel in die zweite Position (geschlossen, am Reifen anliegend) bewegen, sodass das Fahrrad gegen seitliches Umkippen und Wegrollen gesichert ist. Zusätzlich kann die Auslösevorrichtung die Verriegelungsvorrichtung betätigen. Diese kann mittels eines Hakens das jeweilige Laufrad des Fahrrades gegen das Entfernen von oben sichern. Durch dieses Fahrradträgersystem wird das Fahrrad in alle Freiheitsgrade gegen ungewollte Bewegungen gesichert. In dieser Ausführungsform können sowohl ein Haltebügel pro Radhaltesystem, als auch zwei Haltebügel pro Radhaltesystem eingesetzt werden. Bei Einsatz von einem Haltebügel pro Radhaltesystem erfolgt die Gegenkraft über den Haltebügel des zweiten Radhaltesystems und durch das eingespannte Fahrrad selbst. Dieses funktioniert, wenn der jeweils eine Haltebügel auf der von dem anderen Radhaltesystem abgewandten Seite angebracht ist. Die Radhaltesysteme können spiegelsymmetrisch zur Mitte der Verbindungsstange ausgeführt sein. In der Ausführungsform sind die Haltebügel außen an den Aufnahmen der Radhaltesysteme angebracht. Auch ist die Montage der jeweils einen Haltebügel innen, also zwischen den beiden Radhaltesystemen, vorgesehen.

Gemäß einer Ausführungsform ist wenigstens eines der Radhaltesysteme frei beweglich auf der Verbindungsstange angeordnet.

Um das Fahrradträgersystem auf verschiedene Radstände von verschiedenen Fahrradtypen und Rahmengrößen adaptieren zu können, ist wenigstens eines der Radhaltesysteme auf der Verbindungsstange beweglich angeordnet. Die Anpassung des Radstandes kann schnell und einfach durch ein Schnellspannsystem erfolgen. Die beiden Radhaltesysteme auf der Verbindungsstage können so ausgeführt sein, dass wenigstens eines der Radhaltesysteme sich freibeweglich auf der Verbindungsstange bewegen kann und an einer gewünschten Stelle arretiert werden kann. Es können auch beide Radhaltesysteme auf der Verbindungsstange frei beweglich sein.

Gemäß einer Ausführungsform weist das Fahrradträgersystem ferner eine Sattelhaltevorrichtung auf, wobei die Sattelhaltevorrichtung eine Rast-Funktion beinhaltet, die die Sattelhaltevorrichtung auf den Sattel des Fahrrades drückt und das Fahrrad gegen ungewollte Entnahme aus dem Fahrradträgersystem sichert.

Um die auftretenden Kräfte in den Radhaltesystemen zu reduzieren, kann der Hebel verringert werden. Hierzu wird eine Sattelhaltevorrichtung in das Fahrradträgersystem integriert, welche von oben auf den Sattel des Fahrrades drückt und das Fahrrad somit zusätzlich fixiert. Die Sattelhaltevorrichtung kann in der Höhe verstellbar sein, um verschiedene Sattelhöhen berücksichtigen zu können. Die Form der Sattelhaltevorrichtung kann z.B. als Haube ausgeführt werden oder als V-Profil, welches die Sattelnase aufnehmen kann. Dies berücksichtigt, dass die Sattelrohre nicht bei allen Fahrrädern rund sind und auch gegebenenfalls im Durchmesser variieren. Des Weiteren kann die Sattelhaltevorrichtung direkt an dem Sattelrohr angreifen. Die Sattelhaltevorrichtung des Fahrradträgersystems kann ferner mit einer Rast-Funktion ausgeführt sein, sodass diese automatisch gegen ungewolltes Öffnen gesichert ist. Die Rast-Funktion kann es ermöglichen, dass die Sattelhaltevorrichtung in eine Richtung, in diesem Fall nach unten in Richtung Sattel, betätigt werden kann und in die andere Richtung, in diesem Fall nach oben, gesperrt ist. Die Sperre kann manuell entsperrt werden, um die Sattelhaltevorrichtung von dem Sattel weg zu bewegen. Durch die Rast-Funktion ist das schnelle und einfache Betätigen möglich.

Gemäß einer Ausführungsform weißt das Fahrradträgersystem mehrere Verbindungsstangen auf, um mehrere Fahrräder aufzunehmen, wobei das Fahrradträgersystem ausgeführt ist, mehrere Verbindungstangen über ein Erweiterungsmodul auszunehmen, wobei das Erweiterungsmodul ausgelegt ist, um wenigstens zwei Verbindungsstangen miteinander zu verbinden.

Das Fahrradträgersystem kann nicht nur ein Fahrrad, sondern auch zwei, drei, vier oder mehr Fahrräder aufnehmen. Es kann vorgesehen sein, dass das Fahrradträgersystem für eine verschiedene Anzahl von Fahrrädern konfiguriert ist. Als eine weitere Ausführungsform kann das Fahrradträgersystem modular aufgebaut sein, sodass die einzelnen Verbindungsstangen mit den Radhaltesystemen ineinandergesteckt werden können, sodass die einzelnen Verbindungsstangen parallel zueinander angeordnet sind. Durch die modulare Verbindung der einzelnen Verbindungsstangen kann immer die benötigte Anzahl an Fahrradhaltern mitgenommen werden. Somit kann Gewicht, Platz und Kraftstoff gespart werden. Auch ist es somit möglich das Fahrradträgersystem an die individuellen Bedürfnisse des Nutzers anzupassen und das Fahrradträgersystem gegebenenfalls zu erweitern.

Als weitere Ausführungsform können die Erweiterungsmodule verschieden Querschnitte aufweisen, um so sicherzustellen, dass nur eine vorbestimmte Anzahl an Fahrradträgern zu einem Fahrradträgersystem verbunden werden können, d.h. durch das Schlüssel-Schloss-Prinzip. Durch eine zu große Anzahl an Fahrradträgern in einem Fahrradträgersystem kann das Gewicht auf die Anhängerkupplung des Fahrzeugs zu groß werden. Dies kann durch Verwendung von verschieden Querschnitten bei den Erweiterungsmodulen, z.B. kreisrund beim ersten Erweiterungsmodul, oval beim zweiten Erweiterungsmodul und viereckig beim dritten Erweiterungsmodul, beschränkt werden. Somit kann die maximale Anzahl an Fahrradträgern für ein Fahrradträgersystem bestimmt werden.

Gemäß einer weitere Ausführungsform weisen mehrere Radhaltesysteme eine gemeinsame Entriegelungsvorrichtung auf, welche ausgeführt ist, alle Radhaltesysteme zugleich zu entriegeln.

Um eine einfache und sichere Entnahme der Fahrräder sicherzustellen, kann die Entriegelungsvorrichtung ausgeführt sein alle Verriegelungsvorrichtungen und Haltebügel der Radhaltesysteme des Fahrradträgersystems oder alle Verriegelungsvorrichtungen und Haltebügel der Radhaltesysteme einer Verbindungsstange zugleich zu öffnen. Des Weiteren kann die Entriegelungsvorrichtung des Fahrradträgersystems mit einem Schloss und einem passenden Schlüssel gegen das Öffnen durch Unbefugte gesichert werden. Somit kann das Entwenden von Fahrrädern aus dem Fahrradträgersystem verhindert werden.

Gemäß einer Ausführungsform weist das Radhaltesystem einen Exzenter auf. Dieser weist einen ersten Drehpunkt und einen zweiten dazu beabstandeten Drehpunkt auf, wobei der erste Drehpunkt des Exzenters an der Anhängerkupplung des Fahrzeugs befestigt ist und der zweite Drehpunkt an dem Fahrradträgersystem befestigt ist. Der Exzenter ist ausgeführt, die Verbindungsstange mit den wenigstens zwei Radhaltesystemen und einem Fahrrad auf die Höhe der Straße abzusenken, um ein einfaches Be- bzw. Entladen zu gewährleisten.

Mit anderen Worten, kann die Kopplungsvorrichtung zwischen Anhängerkupplung und dem Fahrradträgersystem mit einem Exzenter so ausgeführt sein, dass der Exzenter zwischen einem Be- bzw. Entlademodus und einem Transportmodus hin und her bewegt werden kann. D.h. das Fahrradträgersystem kann im Be- bzw. Entlademodus auf die Höhe der Straße abgesenkt werden, um ein einfaches, schnelles und komfortables Be- bzw. Entladen des/der Fahrräder zu ermöglichen. Im Transportmodus kann der Exzenter das Fahrradträgersystem auf die Höhe der Anhängerkupplung bringen, um so einen sicheren Transport der Fahrräder zu gewährleisten. Für die beschriebene Funktionalität kann der Exzenter zwei Drehpunkte mit einer Verbindung zwischen den Drehpunkten aufweisen. Der erste Drehpunkt kann sich an der Anhängerkupplung des Fahrzeuges befinden und der zweite Drehpunkt kann sich an dem Fahrradträgersystem befinden. Die Verbindung der beiden Drehpunkte kann eine Länge aufweisen, welche mit dem Abstand zwischen der Straße und der Anhängerkupplung korrespondiert. Als Alternative können auch zwei verbundene Exzenter an dem Fahrradträgersystem vorgesehen sein, um eine zur Straße parallele Absenkung des Fahrradträgersystems sicherzustellen. D.h. das Fahrradträgersystem bleibt während der Absenkung waagrecht und kippt nicht zu einer Seite.

Gemäß einer weiterer Ausführungsform der Erfindung wird ein Fahrzeug mit einem Fahrradträgersystem bereitgestellt, wobei die Verbindungsstange des Fahrradträgersystems fest mit dem Chassis des Fahrzeugs verbunden ist.

Eine feste Verbindung im Rahmen dieser Anmeldung stellt eine starre, stabile und starke Verbindung dar, die jedoch lösbar sein kann. Mit anderen Worten, kann die feste Verbindung Kräfte zwischen der Verbindungsstange des Fahrradträgersystems und dem Chassis des Fahrzeugs aufnehmen und weiterleiten. Jedoch kann das Fahrradträgersystem auch vom Chassis des Fahrzeugs getrennt werden. Die feste Verbindung kann beispielsweise durch eine Anhängerkupplung und eine entsprechende Aufnahme an der Kopplungsvorrichtung des Fahrradträgersystems hergestellt werden.

Die Bezeichnung Fahrzeug ist nicht alleine auf einen Pkw begrenzt, sondern schließt auch Lkw, Busse, Traktoren, Panzer, Baumaschinen und Schienenfahrzeuge mit ein.

Weitere Merkmale, Vorteile und Anwendungsmöglichkeiten der Erfindung ergeben sich aus der nachfolgenden Beschreibung der Ausführungsbeispiele und Figuren. Die Figuren sind schematisch und nicht maßstabsgetreu. Sind in der nachfolgenden Beschreibung in verschiedenen Figuren die gleichen Bezugszeichen angegeben, so bezeichnen diese gleiche oder ähnliche Elemente.

### Kurze Beschreibung der Figuren

Fig. 1 zeigt eine schematische Darstellung des Radhaltesystems gemäß einer Ausführungsform der Erfindung in der ersten Position ohne Laufrad.
Fig. 2 zeigt eine schematische Darstellung des Radhaltesystems gemäß einer Ausführungsform der Erfindung in der zweiten Position mit Laufrad.
Fig. 3 zeigt eine schematische Darstellung der Radhaltesystems gemäß einer Ausführungsform der Erfindung ohne Laufrad und mit einem Haltebügel.
Fig. 4a zeigt eine schematische Darstellung eines stufenförmigen Profils eines der Haltebügel mir zwei Armen gemäß einem Ausführungsbeispiel der Erfindung.
Fig. 4b zeigt eine schematische Darstellung eines parabelförmigen Profils eines der Haltebügel mit zwei Armen gemäß einem Ausführungsbeispiel der Erfindung.
Fig. 4c zeigt eine schematische Darstellung eines stufenförmigen Profils eines der Haltebügel mit einem Arm gemäß einem Ausführungsbeispiel der Erfindung
Fig. 4d zeigt eine schematische Darstellung eines parabelförmigen Profils eines der Haltebügel mit einem Arm gemäß einem Ausführungsbeispiel der Erfindung.
Fig. 5 zeigt eine schematische Darstellung eines Fahrradträgersystems mit zwei Radhaltesystemen und einer Verbindungsstange gemäß einer Ausführungsform der Erfindung.
Fig. 6 zeigt eine schematische Darstellung eines Fahrradträgersystems mit zwei Radhaltesystemen und einer Verbindungsstange gemäß einer Ausführungsform mit einem montierten Fahrrad.
Fig. 7 zeigt eine schematische Darstellung eines Fahrzeuges mit dem Fahrradträgersystem gemäß einer Ausführungsform der Erfindung.
Fig. 8 zeigt eine schematische Darstellung eines Fahrzeuges mit dem Fahrradträgersystem gemäß einer Ausführungsform der Erfindung, wobei der Exzenter das Fahrradträgersystem auf die Höhe der Straße absenkt.
Fig. 9 zeigt eine schematische Darstellung eines Fahrzeuges mit einem Fahrradträgersystem in einer seitlichen Ansticht mit der Möglichkeit zum Transport von zwei Fahrrädern gemäß einem Ausführungsform der Erfindung.
Fig. 10 zeigt eine schematische Darstellung des modularen Systems zur Erweiterung des Fahrradträgersystems gemäß einer Ausführungsform der Erfindung.
Fig. 11 zeigt das Fahrradträgersystem gemäß einer Ausführungsform der Erfindung in einer isometrischen Ansicht in einer ersten Position des Radhaltesystems.
Fig. 12 zeigt das Fahrradträgersystem gemäß einer Ausführungsform der Erfindung in einer isometrischen Ansicht in einer zweiten Position des Radhaltesystems.
Fig. 13 zeigt das Fahrradträgersystem gemäß einer Ausführungsform der Erfindung in einer Draufsicht.
Fig. 14 zeigt das Fahrradträgersystem gemäß einer Ausführungsform der Erfindung in einer Heckansicht.

### Detaillierte Beschreibung von Ausführungsformen

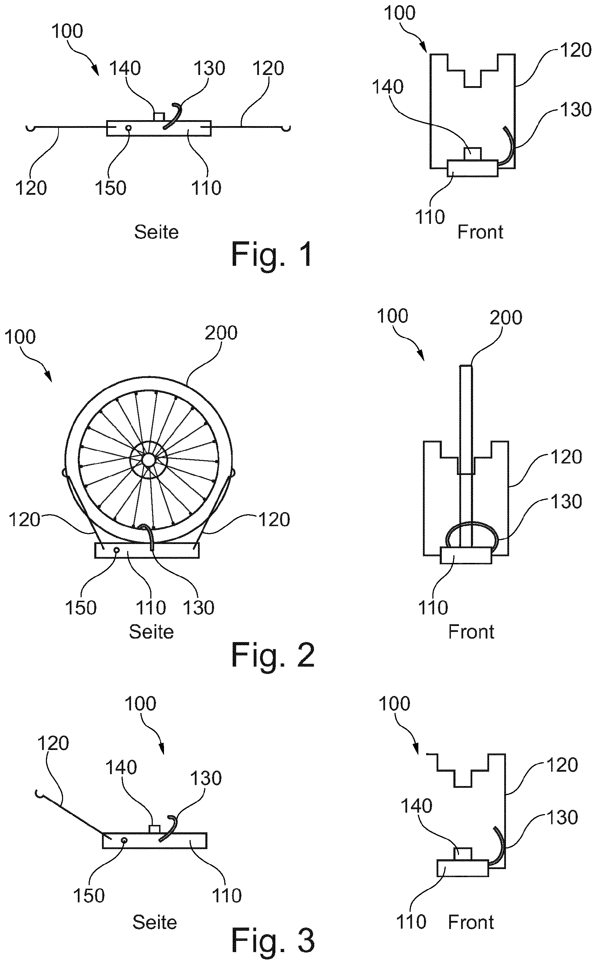

In Fig. 1 ist ein Radhaltesystem 100 dargestellt. Dieses Radhaltesystem 100 weist eine Aufnahme 110, zwei Haltebügel 120, eine Auslösevorrichtung 140, eine Verriegelungsvorrichtung 130 und eine Entriegelungsvorrichtung 150 auf. Das Radhaltesystem aus Fig. 1 ist in der ersten Position (offen) abgebildet. Die beiden Haltebügel 120 sind an den beiden Enden der Aufnahme 110 angebracht. Die Auslösevorrichtung 140 befindet sich mittig in der Aufnahme 110 und kann durch Druck nach unten ausgelöst werden. Die Verriegelungsvorrichtung 130 ist in dieser Ausführungsform als Haken ausgeführt, wobei der Haken seitlich zwischen die Speichen des Laufrades greift. Alternativ oder zusätzlich kann die Verriegelungsvorrichtung 130 von oben, in Bezug auf die Nabe, in radialer Richtung nach außen, auf die Felge des Laufrades drücken, sodass die Felge zwischen der Aufnahme 110 und der Verriegelungsvorrichtung 130 eingeklemmt wird. Die Auslösevorrichtung 140 kann bei Betätigung durch ein Laufrad die beiden Haltebügel 120 in die zweite Position (geschlossen) bringen, sodass die Haltebügel 120 an dem Laufrad eines Fahrrades anliegen. Des Weiteren kann die Auslösevorrichtung 140 die Verriegelungsvorrichtung 130 betätigen, sodass die Verriegelungsvorrichtung 130 schließt und das Laufrad daran hindert aus dem Radhaltesystem 100 zu fallen. Die Entriegelungsvorrichtung 150 kann bei Betätigung die beiden Haltebügel 120 wieder zurück in die erste Position bringen und die Verriegelungsvorrichtung 130 öffnen. Die Haltebügel 120 können hierbei als Drahtkonstruktion oder als Blechkonstruktion ausgeführt werden.

Fig. 2 zeigt das Radhaltesystem 100 in der zweiten Position mit einem Laufrad 200 eines Fahrrades. Das Laufrad 200 des Fahrrades befindet sich in der Aufnahme 110 des Radhaltesystems 100. Durch das Laufrad 200 wurde die Auslösevorrichtung 140 betätigt und die beiden Haltebügel 120 liegen an dem Laufrad 200 an. Des Weiteren wurde durch die Auslösevorrichtung 140 die Verriegelungsvorrichtung 130 betätigt, sodass der Haken der Verriegelungsvorrichtung 130 zwischen die Speichen des Laufrades 200 greift und das Laufrad 200 daran gehindert aus dem Radhaltesystem 100 zu fallen.

Fig. 3 zeigt das Radhaltesystem 100 ohne Laufrad eines Fahrrades mit einem Haltebügel 120. Für eine spätere Verwendung als Fahrradträgersystem ist es ausreichend, wenn die beiden Radhaltesysteme 100 jeweils nur einen Haltebügel 120 aufweisen. Die Gegenkraft wird hierbei durch das andere Radhaltesystem 100 und durch das eingespannte Fahrrad aufgebracht, wenn die beiden Radhaltesysteme 100 jeweils symmetrisch zur Mitte des Fahrradträgersystems einen Haltebügel 120 aufweisen.

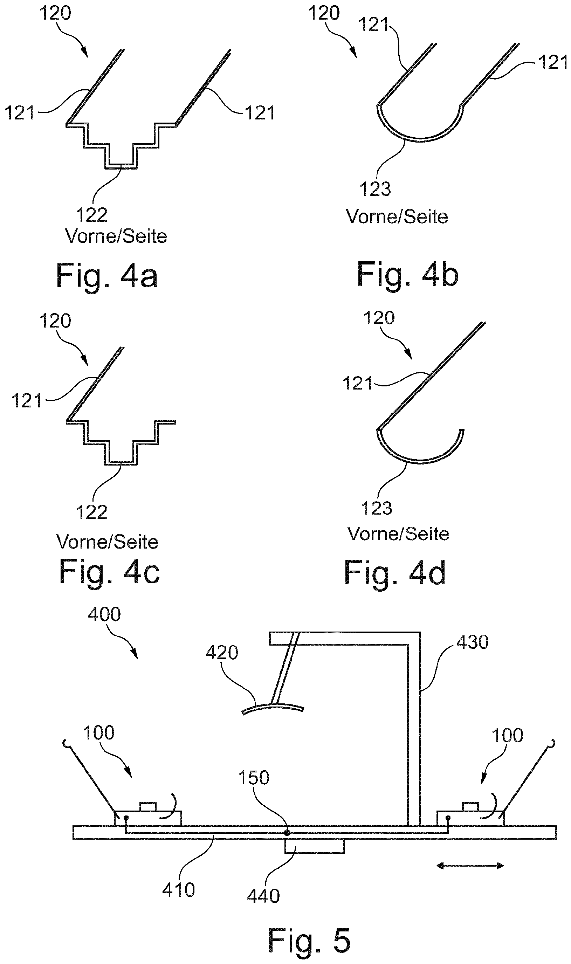

Fig. 4a zeigt eine Profilvariante der Haltebügel 120 des Radhaltesystems 100. In Fig. 4a wird ein stufenförmiges Profil dargestellt. Der Haltebügel 120 besteht in diesem Fall aus zwei parallelen Armen 121 und einem Halte- bzw. Verbindungssteg 122. Der Halte- bzw. Verbindungssteg 122 ist in Fig. 4a stufenförmig ausgeführt. Durch die einzelnen Stufen ist es möglich verschiedene Reifenbreiten aufzunehmen ohne für einen schmalen Reifen zu viel Spiel zuzulassen. Die Anzahl der Stufen und die Höhe der Stufen kann variiert werden und hängt von dem jeweiligen Einsatzgebiet des Radhaltesystems 100 ab. Die Stufen des Profils sind nicht unbedingt rechtwinklig, sondern können auch einen Winkel größer 90° aufweisen, um das Laufrad besser aufnehmen zu können. Der Abstand von zwei gegenüberliegenden Stufenseiten kann sich innerhalb einer Stufe verjüngen.

Fig. 4b zeigt den Haltebügel 120 mit einem parabelförmigen Profil. Der Haltebügel 120 weist zwei parallele Arme 121 und einen Halte- bzw. Verbindungssteg 123 auf. Der Halte- bzw. Verbindungssteg 123 in Fig. 4b ist parabelförmig ausgeführt. Somit können viele Reifenbreiten aufgenommen werden. Der Haltebügel 120 mit parabelförmigen Profil wirkt selbstzentrierend, d.h. das Laufrad wird durch das Anlegen der Haltebügel 120 in der Aufnahme 110 zentriert. Des Weiteren kann ein parabelförmiger Halte- bzw. Verbindungssteg 123 die konvexe Form des Reifens des Laufrades aufnehmen und eine möglichst große Kontaktfläche zwischen Haltebügel 120 und dem eingespannten Reifen sicherstellen.

Fig. 4c zeigt eine Profilvariante der Haltebügel 120 des Radhaltesystems 100. In Fig. 4c wird ein stufenförmiges Profil dargestellt. Der Haltebügel 120 besteht in diesem Fall aus einem Arm 121 und einem Halte- bzw. Verbindungssteg 122. Der Halte- bzw. Verbindungssteg 122 ist in Fig. 4c stufenförmig ausgeführt. Durch die einzelnen Stufen ist es möglich verschiedene Reifenbreiten aufzunehmen ohne für einen schmalen Reifen zu viel Spiel zuzulassen. Die Anzahl der Stufen und die Höhe der Stufen kann variiert werden und hängt von dem jeweiligen Einsatzgebiet des Radhaltesystems 100 ab. Die Stufen des Profils sind nicht unbedingt rechtwinklig, sondern können auch einen Winkel größer 90° aufweisen, um das Laufrad besser aufnehmen zu können. Der Abstand von zwei gegenüberliegenden Stufenseiten kann sich innerhalb einer Stufe verjüngen.

Fig. 4d zeigt den Haltebügel 120 mit einem parabelförmigen Profil. Der Haltebügel 120 weist einen Arm 121 und einen Halte- bzw. Verbindungssteg 123 auf. Der Halte- bzw. Verbindungssteg 123 in Fig. 4d ist parabelförmig ausgeführt. Somit können viele Reifenbreiten aufgenommen werden und der Haltebügel 120 mit parabelförmigen Profil wirkt selbstzentrierend, d.h. das Laufrad wird durch das Anlegen der Haltebügel 120 in der Aufnahme 110 zentriert. Des Weiteren kann ein parabelförmiger Halte- bzw. Verbindungssteg 123 die konvexe Form des Reifens des Laufrades aufnehmen und eine möglichst große Kontaktfläche zwischen Haltebügel 120 und dem eingespannten Reifen sicherstellen.

Fig. 5 zeigt ein Fahrradträgersystem 400. Das Fahrradträgersystem 400 weist zwei Radhaltesysteme 100, eine Verbindungsstange 410, eine Entriegelungsvorrichtung 150, eine Kopplungsvorrichtung 440, ein Verbindungselement 430 und eine Sattelhaltevorrichtung 420 auf. Die Verbindungsstange 410 verbindet die beiden Radhaltesysteme 100, wobei wenigstens eines der Radhaltesysteme 100 freibeweglich auf der Verbindungsstange 410 moniert ist und in einer gewünschten Position fixiert werden kann. Es können auch beide Radhaltesysteme 100 beweglich ausgeführt sein. Durch die Verschiebbarkeit kann das Fahrradträgersystem 400 auf verschiedene Radstände der verschiedenen Fahrradtypen und Rahmengrößen angepasst werden. Über die Kopplungsvorrichtung 440 kann das Fahrradträgersystem 400 mit einer Anhängerkupplung eines Fahrzeuges gekoppelt werden. Des Weiteren kann das Fahrradträgersystem 400 ein Verbindungselement 430 und eine am Verbindungselement 430 angebrachte Sattelhaltevorrichtung 420 aufweisen. Die Sattelhaltevorrichtung 420 dient dazu den Sattel des Fahrrades zu halten und das Gesamtsystem hierdurch zu stabilisieren. Das Verbindungselement 430 stellt die Verbindung zwischen der Sattelhaltevorrichtung 420 und der Verbindungsstange 410 dar. Die Sattelhaltevorrichtung 420 kann verschiedene Formen aufweisen, diese kann sowohl als Haube oder als V-Profil zum Aufnahme der Sattelnase ausgeführt sein. Eine Sattelhalterung 420, welche direkt an das Sattelrohr angreift ist ebenfalls vorgesehen.

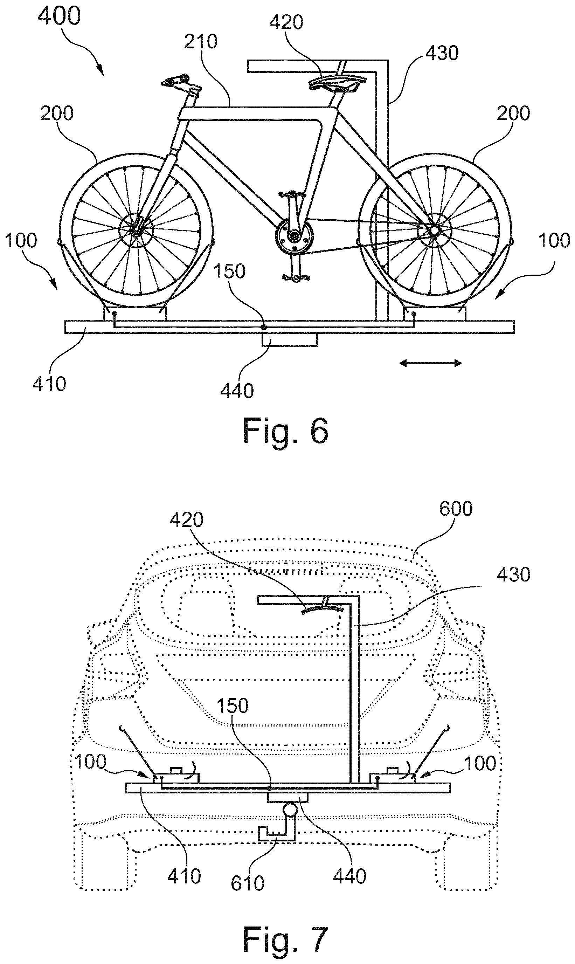

Fig. 6 zeigt ein Fahrradträgersystem 400 mit einem eingespannten Fahrrad 210. Das Fahrrad 210 ist in dem Fahrradträgersystem 400 eingespannt und wird durch die Radhaltesysteme 100 und die Sattelhaltevorrichtung 420 fixiert. Jedes der beiden Laufräder 200 des Fahrrades 210 ist in einem der beiden Radhaltesysteme 100 eingespannt. Die Haltebügel 120 halten jeweils ein Laufrad 200 in der Aufnahme 110. Die Verriegelungsvorrichtung 130 fixiert die Laufräder 200 zusätzlich. Die Verbindungsstange 410 dient als Träger der beiden Radhaltesysteme 100 und damit auch als Träger des Fahrrades 210. Um das Fahrrad 210 zusätzlich gegeben ungewolltes Bewegen zu sichern, ist eine Sattelhaltevorrichtung 420 vorgesehen. Die Sattelhaltevorrichtung 420 ist durch ein Verbindungselement 430 mit der Verbindungsstange 410 verbunden. Die Sattelhaltevorrichtung 420 kann auf dem Verbindungselement 430 sowohl in der Höhe als auch seitlich bewegt werden. Die Sattelhaltevorrichtung 420 kann auf den Sattel des Fahrrades 210 gedrückt werden. Die Sattelhaltevorrichtung 420 weist ferner eine Rast-Funktion auf, sodass die Sattelhaltevorrichtung gegen ein ungewolltes Öffnen gesichert ist. Die Rast-Funktion kann durch einen Entsperrmechanismus entsperrt werden, sodass die Sattelhaltevorrichtung 420 von dem Sattel des Fahrrades entfernt werden kann. Durch die Entriegelungsvorrichtung 130 können beide Radhaltesysteme 100 entriegelt werden, d.h. es werden beide Verriegelungsvorrichtungen 130 aus den Speichen der Laufräder entfernt und die Haltebügel 120 in die erste Position bewegt.

Fig. 7 zeigt ein Fahrzeug 600 mit einer Anhängerkupplung 610 auf welcher das Fahrradträgersystem 400 über die Kopplungsvorrichtung 440 angebracht ist. Die Verbindungsstange 410 befindet sich parallel zur Heckklappe des Fahrzeuges 600. Auf der Verbindungsstange 410 sind die beiden Radhaltesysteme 100 montiert. Zusätzlich ist das Verbindungselement 430 für die Sattelhaltevorrichtung 420 an der Verbindungsstange 410 montiert. In Fig. 7 befindet sich das Fahrradträgersystem 400 im Transportmodus, d.h. auf Höhe der Anhängerkupplung 610 des Fahrzeuges 600.

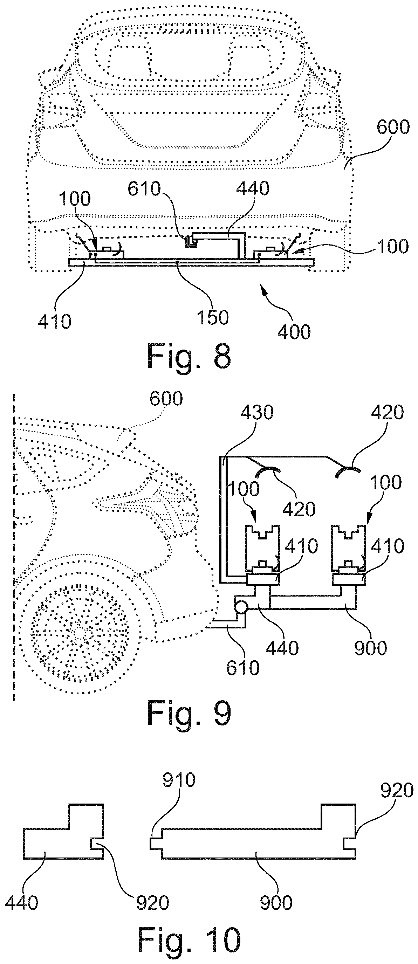

Fig. 8 zeigt ein Fahrzeug 600 mit dem Fahrradträgersystem 400. Das Fahrradträgersystem 400 ist über die Anhängerkupplung 610 mit dem Fahrzeug 600 verbunden. Die Kopplungsvorrichtung 440 weist einen Exzenter auf. Mit diesem Exzenter kann die Kopplungsvorrichtung 440 das Fahrradträgersystem 400 von dem Transportmodus in einen Be- bzw. Entlademodus überführen. Der Be- bzw.

Entlademodus ermöglicht es das Fahrradträgersystem auf Höhe der Straße abzusenken, sodass ein einfaches, schnelles und komfortables Be- bzw. Entladen möglich ist.

Fig. 9 zeigt ein Fahrzeug 600 mit einem Fahrradträgersystem 400 in einer seitlichen Ansicht. Das Fahrradträgersystem ist über das Kopplungselement 440 mit der Anhängerkupplung 610 des Fahrzeugs 600 verbunden. Um dem modularen Aufbau des Fahrradträgersystems 400 gerecht zu werden, können zusätzliche Verbindungsstangen 410 über das Erweiterungsmodul 900 an das Fahrradträgersystem 400 angekoppelt werden. In gleicher Art und Weise kann die Sattelhaltevorrichtung 420 um zusätzliche Elemente erweitert werden.

Fig. 10 zeigt eine Möglichkeit zur Erweiterung des Fahrradträgersystems 400 durch ein Erweiterungsmodul 900. Das Erweiterungsmodul besitzt Zapfen 910 welche in korrespondierende Löcher 920 an dem Fahrradträgersystem 400 passen. Die Verbindung von Zapfen 910 und Loch 920 kann noch zusätzlich gegen ungewolltes Lösen durch eine Verriegelung gesichert werden, wie z.B. durch Splinte oder Schnallen.

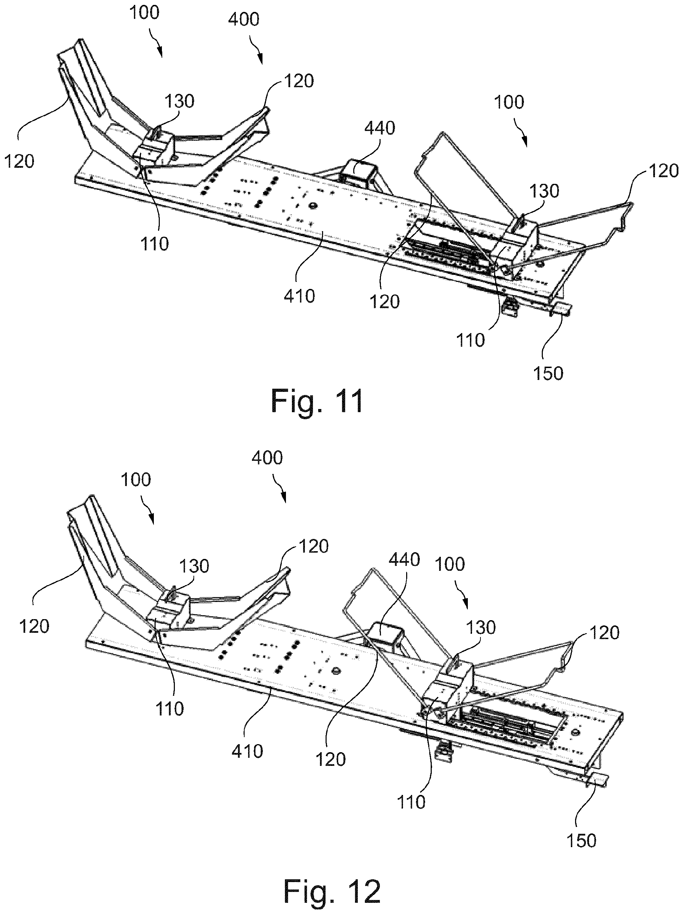

Fig. 11 zeigt das Fahrradträgersystem 400 in einer isometrischen Ansicht in einer ersten Position des Radhaltesystems 100. Entlang der Verbindungsstange 410 kann wenigstens eines der beiden Radhaltesysteme 100 verschiebbar angeordnet sein, um das Fahrradträgersystem 400 auf die Größe des jeweiligen Fahrrades anpassen zu können. In Fig. 11 ist das rechte Radhaltesystem 100 verstellbar ausgeführt und das linke Radhaltesystem 100 ist fest ausgeführt. Ferner ist in Fig. 11 das linke Radhaltesystem 100 mit Haltebügeln 120 aus einer Blechkonstruktion versehen und das rechte Radhaltesystem 100 ist mit Haltebügeln 120 aus einer Drahtkonstruktion versehen. Ferner ist das Fahrradträgersystem 400 mit einer Kopplungsvorrichtung 440 versehen, um es mit einem Chassis eines Fahrzeugs zu koppeln. Ferner ist in Fig. 11 die Auslösevorrichtung 150 zu sehen, wodurch die beiden Radhaltesysteme 100 das in ihnen eingespannte Laufrad eines Fahrrades wieder freigeben.

Fig. 12 zeigt das Fahrradträgersystem 400 aus Fig. 11, jedoch in einer zweiten Position des rechten Radhaltesystems 100, in dieser Ausführungsform wurde das recht Radhaltesystem 100 näher an das bzw. zu dem linke Radhaltesystem 100 bewegt. Somit kann auch ein Fahrrad mit einem geringeren Radstand in dem Fahrradträgersystem 400 befestigt werden. Es sei angemerkt, dass die Verstellung des Abstandes zwischen den beiden Radhaltesystemen 100 entlang der Verbindungsstande 410 stufenlos oder in diskreten Stufen erfolgen kann. In Fig. 12 ist jedoch die Verstellung in diskreten Stufen dargestellt.

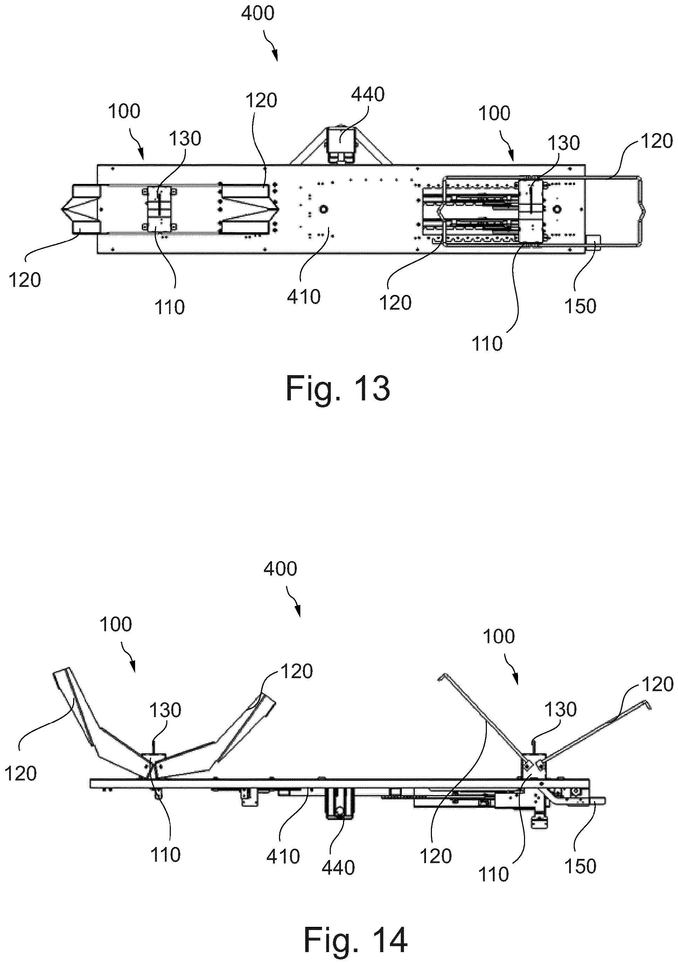

Fig. 13 zeigt das Fahrradträgersystem 400 in einer Draufsicht. Hierbei ist ersichtlich, dass die Kopplungsvorrichtung 440 hinter bzw. näher in Richtung dem Fahrzeug in Bezug auf die Verbindungsstange 410 angebracht werden kann. Ferner kann in Fig. 13 gesehen werden, dass das rechte Radhaltesystem 100 entlang zweier paralleler Schienen verschoben werden kann. Des Weiteren weisen die Schienen in Fig. 13 diskrete Positionen zum Verstellen auf.

Fig. 14 zeigt das Fahrradträgersystem 400 gemäß einer Ausführungsform der Erfindung in einer Heckansicht. Hierbei ist insbesondere die Kopplungsvorrichtung 440 zu erkennen. Ferner kann die Auslösevorrichtung 150 als Hebel ausgeführt sein, um das Laufrad aus den Radhaltesystemen 100 wieder freizugeben. Des Weiteren können durch Betätigen dieses Hebels der Auslösevorrichtung 150 beide Radhaltesysteme 100 gleichzeitig freigegeben werden.
Die in den Figuren 11 bis 14 gezeigten Ausführungsformen können auch dahingehend verstanden werden, dass das linke Radhaltesystem 100 aus der Blechkonstruktion besteht und dass das rechte Radhaltesystem 100 aus der Drahtkonstruktion besteht oder umgekehrt. Ferner können auch beide Radhaltesysteme 100 (links und rechts) als Blechkonstruktion oder als Drahtkonstruktion ausgeführt sein. Der Bewegungsmechanismus kann dadurch unverändert bleiben, ebenso die Verriegelungsvorrichtung 130 und die Auslösevorrichtung 150 des Laufrades.

## Patentansprüche

1. Radhaltesystem (100) für ein Fahrrad, aufweisend:
eine Aufnahme (110) für ein Laufrad eines Fahrrades,
wenigstens einen bewegbaren Haltebügel (120) zur Fixierung eines Laufrades eines Fahrrades, wobei der bewegbare Haltebügel (120) von einer ersten Position in eine zweite Position bewegbar ist, wobei der Haltebügel (120) in der ersten Position von einem einzusetzenden Laufradrad beabstandet ist und in der zweiten Position des Haltebügels (120) an einem einzusetzenden Laufrad anliegt,
eine Verriegelungsvorrichtung (130) zur Verriegelung des Laufrades in der Aufnahme (110),
eine Auslösevorrichtung (140) zum automatischen Betätigen der Verriegelungsvorrichtung (130),
wobei die Auslösevorrichtung (140) ausgeführt ist durch Einsetzen eines Laufrades in der Aufnahme (110) auszulösen,
wobei das Auslösen der Auslösevorrichtung (140) den wenigsten einen Haltebügel (120) von der ersten Position in die zweite Position bewegt und an ein eingesetztes Laufrad drückt, sodass ein eingesetztes Laufrad fixiert ist, und
wobei die Auslösevorrichtung (140) ausgeführt ist nach Fixierung des Laufrades durch den Haltebügel (120) die Verriegelungsvorrichtung (130) zu betätigen und das Laufrad in der fixierten Position zu verriegeln, sodass ein eingesetztes Laufrad in der Aufnahme (110) arretiert ist.

2. Radhaltesystem (100) gemäß Anspruch 1, ferner aufweisend:
eine Entriegelungsvorrichtung (150) zur Freigabe des Laufrades durch das Radhaltesystem (100),
wobei die Entriegelungsvorrichtung ausgeführt ist bei Betätigung der Entriegelungsvorrichtung die Verriegelungsvorrichtung (130) zu lösen und den wenigstens einen Haltebügel (120) für eine Bewegung aus der zweiten Position in die erste Position freizugeben, um auf diese Weise das arretierte Laufrad aus dem Radhaltesystem (100) freizugeben.

3. Radhaltesystem (100) gemäß einem der Ansprüche 1 oder 2,
wobei der Haltebügel (120) wenigstens einen Arm (121) aufweist, welcher einen Halte- bzw. Verbindungssteg (122, 123) aufweist, und
wobei der Halte- bzw. Verbindungssteg (122, 123) das Laufrad quer zur Laufrichtung umgibt.

4. Radhaltesystem (100) gemäß Anspruch 3,
wobei wenigstens ein Arm (121) des Haltebügels (120) gerade ausgeführt ist.

5. Radhaltesystem (100) gemäß einem der Ansprüche 3 oder 4,
wobei wenigstens ein Arm (121) des Haltebügels (120) gekrümmt ausgeführt ist.

6. Radhaltesystem (100) gemäß einem der Ansprüche 3 bis 5,
wobei der Verbindungssteg (122) stufenförmig ausgeführt ist, um verschieden breite Laufräder aufzunehmen,
wobei der Abstand sich zwei gegenüberliegenden Stufen in jeder Stufe abnimmt.

7. Radhaltesystem (100) gemäß einem der Ansprüche 1 bis 5,
wobei der Verbindungssteg (123) parabelförmig ausgeführt ist, um verschieden breite Laufräder aufzunehmen.

8. Fahrradträgersystem (400) für ein Fahrzeug, aufweisend:
wenigstens ein erstes und ein zweites Radhaltesystem (100) gemäß einem der Ansprüche 1 bis 7,
eine Verbindungsstange (410), zum Verbinden der Radhaltesysteme (100),
eine Kopplungsvorrichtung (440) zum Koppeln des Fahrradträgersystems (400) mit einem Fahrzeug,
wobei der Haltebügel (120) des ersten Radhaltesystems (100) auf der vom zweiten Radhaltesystem (100) abgewandten Seite und der Haltebügel (120) des zweiten Radhaltesystems (100) auf der von ersten Radhaltesystem (100) abgewandten Seite angeordnet ist.

9. Fahrradträgersystem (400) gemäß Anspruch 8,
wobei wenigstens eines der Radhaltesysteme (100) auf der Verbindungsstange (410) frei beweglich angeordnet ist.

10. Fahrradträgersystem (400) gemäß Anspruch 8 oder 9, ferner aufweisend:
eine Sattelhaltevorrichtung (420) zum Fixieren des Sattels des Fahrrades,
wobei die Sattelhaltevorrichtung (420) ausgeführt ist, über eine Rast-Funktion auf den Sattel des Fahrrades zu drücken und gegen ungewolltes Öffnen gesichert ist.

11. Fahrradträgersystem (400) gemäß einem der Ansprüche 8 bis 10,
wobei das Fahrradträgersystem (400) mehrere Verbindungsstangen (410) aufweist, um mehrere Fahrräder aufzunehmen,
wobei das Fahrradträgersystem ausgeführt ist, mehrere Verbindungsstangen (410) über ein Erweiterungsmodul (900) aufzunehmen, wobei das Erweiterungsmodul (900) ausgelegt ist, um wenigstens zwei Verbindungsstangen (410) miteinander zu verbinden.

12. Fahrradträgersystem (400) gemäß einem der Ansprüche 8 bis 11,
wobei mehrere Radhaltesysteme (100) gemäß einem der Ansprüche 2 bis 7 eine gemeinsame Entriegelungsvorrichtung (150) aufweisen, welche ausgeführt ist, alle Radhaltesysteme (100) zugleich zu entriegeln.

13. Fahrradträgersystem (400) gemäß einem der Ansprüche 8 bis 12, ferner aufweisend,
einen Exzenter mit einem ersten Drehpunkt und einem zweiten dazu versetzten Drehpunkt,
wobei der erste Drehpunkt des Exzenters an der Anhängerkupplung (610) des Fahrzeugs (600) angeordnet ist und der zweite Drehpunkt an dem Fahrradträgersystem (400) angeordnet ist,
und der Exzenter ausgeführt ist, die Verbindungsstange (410) mit den wenigstens zwei Radhaltesystemen (100) auf Höhe der Straße abzusenken, um ein einfaches Be- bzw. Entladen zu gewährleisten.

14. Fahrzeug (600) mit einem Fahrradträgersystem (400) gemäß einem der Ansprüche 8 bis 13,
wobei die Verbindungsstange (410) des Fahrradträgersystems (400) fest mit dem Chassis des Fahrzeugs (600) verbunden ist.

## Claims

1. A wheel retention system (100) for a bicycle, comprising:
a receptacle (110) for a running wheel of a bicycle,
at least one movable retaining bracket (120) for fixating a running wheel of a bicycle, wherein the movable retaining bracket (120) is movable from a first position into a second position, wherein in the first position the retaining bracket (120) is spaced apart from a to be inserted running wheel and wherein in the second position the retaining bracket (120) resting against a to be inserted running wheel,
a locking device (130) for locking the running wheel in the receptacle (110),
a triggering device (140) for automatically actuating the locking device (130),
wherein the triggering device (140) is configured to be triggered by insertion of a running wheel in the receptacle (110),
wherein triggering of the triggering device (140) moving at least one retaining bracket (120) from the first position into the second position and pressing against an inserted running wheel such that an inserted running wheel is fixed, and
wherein after the running wheel is fixed by the retaining bracket (120) the triggering device (140) is configured to actuate the locking device (130) and to lock the running wheel in the fixed position such that an inserted running wheel is locked in the receptacle (110).

2. The wheel retention system (100) according to claim 1 further comprising:
an unlocking device (150) for releasing the running wheel from the wheel retention system (100),
wherein the unlocking device is configured to release the locking device (130) upon actuation of the unlocking device and to release the at least one retaining bracket (120) for moving from the second position to the first position so as to release the locked running wheel from the wheel retention system (100).

3. The wheel retention system (100) according to any one of claims 1 or 2,
wherein the retaining bracket (120) comprising at least one arm (121) which comprises a retaining or connecting bar (122, 123), and
wherein the retaining or connecting bar (122, 123) surrounding the running wheel transversely to the running direction.

4. The wheel retention system (100) according to claim 3,
wherein at least one arm (121) of the retaining bracket (120) is straight.

5. The wheel retention system (100) according to any of claims 3 or 4,
wherein at least one arm (121) of the retaining bracket (120) is curved.

6. The wheel retention system (100) according to any one of claims 3 to 5,
wherein the connecting bar (122) is step-shaped to accommodate running wheels of different widths,
wherein the distance between two opposite steps in each step decreases.

7. The wheel retention system (100) according to any one of claims 1 to 5,
wherein the connecting bar (123) has a parabolic shape to accommodate running wheels of different widths.

8. A bicycle carrier system (400) for a vehicle, comprising:
at least a first and a second wheel retention system (100) according to any one of claims 1 to 7,
a connecting rod (410) for connecting the wheel retention systems (100),
a coupling device (440) for coupling the bicycle carrier system (400) to a vehicle,
wherein the retaining bracket (120) of the first wheel retention system (100) is arranged on the side remote from the second wheel retention system (100) and the retaining bracket (120) of the second wheel retention system (100) is arranged on the side remote from the first wheel retention system (100).

9. The bicycle carrier system (400) according to claim 8,
wherein at least one of the wheel retention systems (100) is arranged freely movable on the connecting rod (410).

10. The bicycle carrier system (400) according to claim 8 or 9, further comprising:
a saddle holding device (420) for fixing the saddle of the bicycle,
wherein the saddle holding device (420) is configured to press on the saddle of the bicycle and secure it against unintentional opening via a latching function.

11. The bicycle carrier system (400) according to any of claims 8 to 10,
wherein the bicycle carrier system (400) comprising a plurality of connecting rods (410) for receiving a plurality of bicycles,
wherein the bicycle carrier system is configured to receive a plurality of connecting rods (410) via an extension module (900), the extension module (900) is configured to interconnect at least two connecting rods (410).

12. The bicycle carrier system (400) according to any of claims 8 to 11,
wherein a plurality of wheel retention systems (100) according to any one of claims 2 to 7 comprise a common unlocking device (150) configured to unlock all wheel retention systems (100) simultaneously.

13. The bicycle carrier system (400) according to any of claims 8 to 12, further comprising,
an eccentric with a first fulcrum and offset to it a second fulcrum,
the first fulcrum of the eccentric is located at the trailer coupling (610) of the vehicle (600) and the second fulcrum is located at the bicycle carrier system (400),
and the eccentric is configured to lower the connecting rod (410) with the at least two wheel retention systems (100) at the level of the road in order to ensure easy loading or unloading.

14. A vehicle (600) having a bicycle carrier system (400) according to any one of claims 8 to 13,
wherein the connecting rod (410) of the bicycle carrier system (400) is fixedly connected to the chassis of the vehicle (600).

## Revendications

1. Système de retenue de roue (100) pour une bicyclette, comportant :
un logement (110) pour une roue d'une bicyclette,
au moins un étrier de retenue (120) mobile destiné à la fixation d'une roue d'une bicyclette, l'étrier de retenue (120) mobile étant mobile à partir d'une première position vers une deuxième position, l'étrier de retenue (120) étant, dans la première position, distant d'une roue à insérer et étant, dans la deuxième position de l'étrier de retenue (120), adjacent à une roue à insérer,
un dispositif de verrouillage (130) destiné au verrouillage de la roue dans le logement (110),
un dispositif de déclenchement (140) destiné à l'actionnement automatique du dispositif de verrouillage (130),
le dispositif de déclenchement (140) étant réalisé pour déclencher par l'insertion d'une roue dans le logement (110),
le déclenchement du dispositif de déclenchement (140) déplaçant l'étrier de retenue (120) au moins au nombre de un à partir de la première position vers la deuxième position et pressant sur une roue insérée de telle sorte qu'une roue insérée est fixée, et
le dispositif de déclenchement (140) étant réalisé pour, après la fixation de la roue par l'étrier de retenue (120), actionner le dispositif de verrouillage (130) et pour verrouiller la roue dans la position fixée de telle sorte qu'une roue insérée est bloquée dans le logement (110).

2. Système de retenue de roue (100) selon la revendication 1, comportant en outre :
un dispositif de déverrouillage (150) destiné à la libération de la roue par le système de retenue de roue (100),
le dispositif de déverrouillage étant réalisé, lors de l'actionnement du dispositif de déverrouillage, pour relâcher le dispositif de verrouillage (130) et pour libérer l'étrier de retenue (120) au moins au nombre de un pour un mouvement à partir de la deuxième position vers la première position pour libérer de cette façon la roue bloquée à partir du système de retenue de roue (100).

3. Système de retenue de roue (100) selon l'une des revendications 1 ou 2,
l'étrier de retenue (120) comportant au moins un bras (121), lequel comporte une entretoise de retenue ou respectivement de raccordement (122, 123), et
l'entretoise de retenue ou respectivement de raccordement (122, 123) entourant la roue transversalement à la direction de roulement.

4. Système de retenue de roue (100) selon la revendication 3, au moins un bras (121) de l'étrier de retenue (120) étant réalisé de façon rectiligne.

5. Système de retenue de roue (100) selon l'une des revendications 3 ou 4,
au moins un bras (121) de l'étrier de retenue (120) étant réalisé de façon courbée.

6. Système de retenue de roue (100) selon l'une des revendications 3 à 5,
l'entretoise de raccordement (122) étant réalisée sous forme étagée pour recevoir des roues de différentes largeurs,
la distance de deux étages opposés diminuant dans chaque étage.

7. Système de retenue de roue (100) selon l'une des revendications 1 à 5,
l'entretoise de raccordement (123) étant réalisée sous forme parabolique pour recevoir des roues de différentes largeurs.

8. Système porte-bicyclette (400) pour un véhicule, comportant :
au moins un premier et un deuxième système de retenue de roue (100) selon l'une des revendications 1 à 7,
une tige de raccordement (410), destinée au raccordement des systèmes de retenue de roue (100),
un dispositif d'accouplement (440) destiné à l'accouplement du système porte-bicyclette (400) avec un véhicule,
l'étrier de retenue (120) du premier système de retenue de roue (100) étant disposé sur le côté éloigné du deuxième système de retenue de roue (100), et l'étrier de retenue (120) du deuxième système de retenue de roue (100) étant disposé sur le côté éloigné du premier système de retenue de roue (100).

9. Système porte-bicyclette (400) selon la revendication 8,
au moins un des systèmes de retenue de roue (100) étant disposé de façon librement mobile sur la tige de raccordement (410).

10. Système porte-bicyclette (400) selon la revendication 8 ou 9, comprenant en outre :
un dispositif de retenue de selle (420) destiné à la fixation de la selle de la bicyclette,
le dispositif de retenue de selle (420) étant réalisé pour, par le biais d'une fonction d'encliquetage, presser sur la selle de la bicyclette et étant protégé contre une ouverture inopinée.

11. Système porte-bicyclette (400) selon l'une des revendications 8 à 10,
le système porte-bicyclette (400) comportant plusieurs tiges de raccordement (410) destinées à recevoir plusieurs bicyclettes,
le système porte-bicyclette étant réalisé pour recevoir plusieurs tiges de raccordement (410) par le biais d'un module d'élargissement (900), le module d'élargissement (900) étant conçu pour raccorder entre elles au moins deux tiges de raccordement (410).

12. Système porte-bicyclette (400) selon l'une des revendications 8 à 11,
plusieurs systèmes de retenue de roue (100) selon l'une des revendications 2 à 7 comportant un dispositif de déverrouillage (150) commun, lequel est réalisé pour déverrouiller en même temps tous les systèmes de retenue de roue (100).

13. Système porte-bicyclette (400) selon l'une des revendications 8 à 12, comportant en outre
un excentrique avec un premier point de rotation et un deuxième point de rotation décalé par rapport à celui-ci,
le premier point de rotation de l'excentrique étant disposé sur l'attelage de remorque (610) du véhicule (600), et le deuxième point de rotation étant disposé sur le système porte-bicyclette (400),
et l'excentrique étant réalisé pour abaisser la tige de raccordement (410) avec les au moins deux systèmes de retenue de roue (100) à la hauteur de la route pour garantir un chargement ou respectivement un déchargement simple.

14. Véhicule (600) avec un système porte-bicyclette (400) selon l'une des revendications 8 à 13,
la tige de raccordement (410) du système porte-bicyclette (400) étant raccordée de façon fixe au châssis du véhicule (600) .
